(19) Europäisches Patentamt
European Patent Office
Office européen des brevets

(11) **EP 2 157 871 B1**

(12) **EUROPEAN PATENT SPECIFICATION**

(45) Date of publication and mention
of the grant of the patent:
**20.06.2012 Bulletin 2012/25**

(21) Application number: **08776540.0**

(22) Date of filing: **26.06.2008**

(51) Int Cl.:
*A21D 10/00* (2006.01)    *A23L 1/164* (2006.01)
*A21D 2/36* (2006.01)

(86) International application number:
**PCT/IB2008/052584**

(87) International publication number:
**WO 2009/001321 (31.12.2008 Gazette 2009/01)**

(54) **NUTRITIOUS FABRICATED SNACK PRODUCTS**

NAHRHAFTE KÜNSTLICHE SNACK-PRODUKTE

PRODUITS DE COLLATION NUTRITIFS FABRIQUÉS

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **26.06.2007 US 937151 P**

(43) Date of publication of application:
**03.03.2010 Bulletin 2010/09**

(73) Proprietor: **The Procter & Gamble Company
Cincinnati, OH 45202 (US)**

(72) Inventors:
• **BUNKE, Paul, Ralph
Cincinnati, Ohio 45248 (US)**

• **EKANAYAKE, Athula
Cincinnati, Ohio 45249 (US)**
• **LIN, Peter, Yen-Chih
Cincinnati, Ohio 45249 (US)**
• **SCHNUR, Sharon, Lee
Cincinnati, Ohio 45014 (US)**

(74) Representative: **Kellenberger, Jakob
NV Procter & Gamble
Services Company S.A.
Temselaan 100
1853 Strombeek-Bever (BE)**

(56) References cited:
**WO-A-02/21937          US-A- 3 259 503
US-A- 4 889 730         US-A- 5 904 947
US-A1- 2006 193 963     US-A1- 2006 286 271**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Field of the Invention

The present invention relates to nutritious fabricated snack products that have authentic flavor.

Background of the Invention

Fabricated snack products prepared from dough comprising starch-based materials are well-known in the art. Potato based dough, and the snacks made there from are especially well known. These doughs are typically fried in oil or baked to form the snack chip. Consumers are, however, looking for snack products that contain healthful ingredients other than starch materials. Moreover, consumers have demanded better flavor and nutrition in snack chips. While all age groups eat snacks, children are heavy consumers of these products and it would be highly desirable if children could get more nutrition from a snack product that they enjoy eating. And even more desirable would be to produce a good tasting snack product without artificial flavors and preservatives. Even more preferred would be a crispy snack product that was nutritious and had a lower fat content than unformulated snack products of similar taste. For example, consumers like to eat nut based snacks. Consumers typically think of nut based snacks or ingredients in a culinary sense, as opposed to a botanical sense. For example hazelnut, pecan, and walnuts are true nuts, however, peanuts, pine nuts, and pistachios are commonly referred to as nuts as well. Botanically speaking the peanut originates from a legume, and pine nuts and pistachios are seeds and originate from trees. Although culinary nuts are eaten as snacks, whether raw, roasted, roasted & salted, etc, they can have a rather hard and dense texture and contain significant amounts of fat. Because of their high fat content, they are hard to formulate into consumer acceptable crispy snack products that are recognizably similar in taste. The high oil content as well as protein, and fiber content, present a challenge in formulation. 1'reparing dough containing fat or oil tends to cause the dough to be more rubbery and elastic, and very difficult to sheet to a thin gauge or thickness typical for snack chips or crisps. The rubbery dough tends to spring back and no longer maintain its thickness. Attempts to reduce the thickness further, in order to compensate for this effect can also be problematic, creating tears within the sheet. These issues have been identified in U.S. Pat. No. 5,498,438 to Strong et al. and references therein and their recourse to nut based formulated snack products has been to start with defatted, roasted nut meal which avoids the challenge of dealing with a high fat content. The relatively high temperatures and/or long cooking times necessary to produce a crisp snack product can degrade the flavor of these nutritional additives such as almonds, peanuts, and the like. The nutritional value of these materials is often degraded during the cooking process as well, particularly when high shear extrusion or steaming is used during processing. Thus, commercially available fabricated snacks contain low levels of these ingredients and thus lack the "authentic flavor" and nutritional value of the main ingredient.

"Authentic flavor" as used herein refers to consumer recognition of the flavor as the flavor of the nutritional component, such as, almond, walnut, hazelnut, peanut, pine nut, or even combined flavors such as apple-peanut, or banana-nut. For example, the flavor of a fabricated hazelnut chip should taste like fresh hazelnuts without the addition of artificial hazelnut flavor. Likewise, a roasted peanut or raw almond based chip should taste like roasted peanuts or raw almonds without the addition of artificial flavors.

There are many reasons for the degradation of the natural flavor and nutritional value in fabricated snack chips comprising fruits, vegetables, meats, cheeses, nuts, fish, whole grains, eggs, and the like. Many of these products are high in moisture, especially fresh fruit. But snack chips, even those made with fruit, must be low in moisture content to make them crisp and to maintain shelf stability without preservatives. While the water content of the dough can be controlled to some extent, the total moisture content of the snack product must be lowered. This dehydration is usually done by steaming, baking, or frying. If the snack chip is to be fried in hot oil, as most are, the dough must be relatively low in moisture before frying to remain low in total fat content as well as to meet the desired caloric content and crispy texture.

The binder in a fabricated chip is typically a starch material that is pregelled or heated as part of the processing. For example, shrimp chips are very popular in many countries. The comminuted shrimp is typically mixed with a bland starch material, for example, rice, and then the dough is cooked at high temperatures to gelatinize the starch and cook the shrimp. This first step has a negative effect on the authenticity of the shrimp flavor and may degrade some of the nutrients as well. The dough is then dried into a "half- product" or intermediate product which is shelf stable. The method of drying can also be detrimental to the remaining flavor and nutrition of the product. Finally, some finishing processes such as frying, baking, microwaving, or the like, to make a crisp snack product, also are detrimental to flavor and nutrition.

In the past, the addition of pieces of the nutritional food ingredients into a starch based dough, for example, pieces of fruit, vegetable, meat, nuts, cheese and the like, resulted in a product with burnt pieces of the additive and often off-flavors. These products did not taste good and sometimes had dark or burnt specks.

Hence, there exists a need for formulae, doughs and processes for making fabricated snack products with relatively high concentrations of non-starch ingredients, for example, nuts, seeds, legumes, and the like, while maintaining certain textural and taste qualities that consumers prefer. And there is a need for a nuts, seeds, legume, containing snack product that is made from a sheet of dough or extruded, and then fried, partially fried and then baked, or baked that tastes good. Additionally there is a need for fabricated culinary nut snacks that have an "authentic flavor" and nutritional value of the main ingredient, and where the snack has approximately a 20 to 60% lower fat than an equivalent serving of the culinary nut.

WO0221937 discloses a crispy savoury snack food product comprising a cereal which is agglomerated by a binder comprising a glass of sugar.

These and other advantages of the invention will become apparent from the following disclosure.

Summary of the Invention

The provides invention provides a dough composition for making a fabricated snack chip, comprising:

　(a) from 40% to 70% by weight of a dry blend comprising

　　(i) from 30% to 60% by weight of a culinary nut based material made from nuts that have not been defatted;
　　(ii) from 40% to 60% by weight of a starch material made from materials selected from the group consisting of tapioca, rice, and mixtures thereof;
　　(iii) from 0% to 30% optional dry ingredients;

　(b) from 20% to 60% by weight of added water;
　(c) from 0% to 50% by weight of optional ingredients;

wherein at least 40% of the starch material is pre-gelatinized. The optional ingredients are selected from the group consisting of natural or artificial flavors, oatmeal, fruits, vegetables, flavor enhancers, fats and oils, natural sweeteners, artificial sweeteners, non-digestible fats or oils, vitamin or minerals and mixtures thereof. Typically, salt, sugar, butter, artificial butter or spice flavors, artificial sweeteners, oil, and vegetable pieces are used.

In another aspect of the present invention the snack chip is made by combining the nut based material and dry ingredients with water to form a sheetable dough. The dough is mixed and sheeted without passing through a cooking extruder. The sheeted dough is cut and dried to form a fabricated snack product or "half product". For a half-product, the dough is dried at a temperature of less than 121 °C [250° F] Half products are shelf stable and can be stored and cooked later. The half product can also be cooked immediately after the drying process to form the snack chip by baking, frying in oil, vacuum baking or frying, microwaving, and mixtures of these methods.

In another aspect of the present invention the snack chip is made by combining the nut based material and dry ingredients with water to form a sheetable dough. The dough is mixed and sheeted without passing through a cooking extruder. The sheeted dough is cut into desirable shaped pieces and cooked by baking at 177 °C [350° F] for a couple of minutes, and then allowed to continue baking at a lower temperature of 107 °C [225 °F] for 10 more minutes.

The present invention delivers a snack chip that has a high concentration of nutritional culinary nut ingredients. For example, preparing a dough with added nuts, seeds, legumes, and the like, wherein the snack chip retains both the authentic and natural flavors and nutritional benefits of the non-starch ingredient. Moreover, the snack chips of the present invention provide consumer acceptable taste without the need for added artificial flavors to mimic the main the natural ingredient. They are preferably formulated to provide less fat than an equal serving of the same culinary nut. The snack chips of this invention have a crispy and crunchy texture, and appealing appearance to consumers. Further, the dough and snacks made there from are lower in fat than the main natural ingredient and have few off-flavors.

Detailed Description of the Invention

A. DEFINITIONS

As used herein "gelatinized starch" includes any type of starch that has been treated to gelatinize the starch. Processed or commercial starches have had most of the moisture removed and they are generally insoluble in water. As starch and water are heated, the grains or granules absorb water. Generally, up to 60° to 70°C, this absorption is reversible. However as heating is continued the swelling of the granule is irreversible and this is when gelatinization begins. The exact gelatinization temperature is dependent on the starch. Gelatinization is usually evidenced by increased translucency of the starch and increased viscosity of the solution. Starch also loses it birefringence when gelatinized.

Gelatinized starches as used herein include fully gelatinized, partially gelatinized, and pregelatinized starches. Gelatinized starches can include, but are not limited to, those which have been treated by parboiling, cooking, partially cooking, and extruded flours.

As used herein, "pre-gelatinized" means the starch has been treated to gelatinize it. Pre-gelatinized starch is usually a dry powder. Pre-gelatinizing is done before the starch is used to make the dough.

As used herein "vegetable materials" refers to raw materials or any intermediate source of fruit or vegetables. Examples are fruit based flour, fruit based pellets, extruded fruit products, dried fruit pieces, fruit purees, vegetable powders, vegetable purees, vegetable flours, and combinations thereof.

As used herein "culinary nuts" refers to what the general public regards as edible nuts, and includes raw, dried, or processed, seeds, legumes, and true botanical nuts. Any oily kernel found within a shell and used for nutrition can be regarded as a culinary nut. The culinary nut material is in a form selected from the group consisting of fresh, raw, dried, blanched, cooked, roasted, boiled, chopped, ground, paste, and mixtures thereof.

As used herein "nutritional additives" refers to any food that is part of the Food Guide Pyramid (as defined by the United States Center for Disease Control, Atlanta, Georgia). These include fruits, vegetables, proteins or meats, dairy products, and fats. Fiber enriched foods are also nutritional additives. These nutritional additives may be dehydrated to a moisture content of less than about 15%, or used in their fresh, natural state.

As used herein, the term "fabricated" refers to food products made from doughs comprising flour, meal, and/or starch, such as those derived from roots, tubers, grains, legumes, cereals, or mixtures thereof. For example, a potato chip that is prepared by frying a portion of a potato is not fabricated, but a potato chip made of potato flakes and starch made into a dough piece that is fried is a fabricated potato chip.

As used herein, "native starch" refers to starch that has not been pre-treated or cooked in any way, and includes but is not limited to hybrid starches.

As used herein, "dehydrated potato products" includes, but is not limited to, potato flakes, potato flanules, potato granules, potato agglomerates, any other dehydrated potato material, and mixtures thereof.

As used herein, "sheetable dough" is cohesive dough capable of being placed on a smooth surface and rolled to the desired final thickness without tearing or forming holes. Sheetable dough can also include dough that is capable of being formed into a sheet by rolling or pressing between two belts or through a low work, low temperature process.

As used herein, "starch" refers to a native or an unmodified carbohydrate polymer containing both amylose and amylopectin. It is derived from legumes, grain, and tubers such as, but not limited to, wheat, corn, tapioca, sago, rice, potato, oat, barley, and amaranth, Starch as used herein, also refers to modified starch including but not limited to hydrolyzed starches such as maltodextrins, high amylose corn maize, high amylopectin corn maize, pure amylose, chemically substituted starches, crosslinked starches, and other modifications including but not limited to chemical, physical, thermal or enzymatic and mixtures thereof.

As used herein, "starch-based flour" refers to starch, in either natural, dehydrated (e.g., flakes, granules, meal) or flour form. Starch-based flour can include, but is not limited to, potato flour, potato granules, potato flanules, potato flakes, corn flour, masa corn flour, corn grits, corn meat, rice flour, buckwheat flour, oat flour, bean flour, barley flour, tapioca, and mixtures thereof. For example, the starch-based flour can be derived from tubers, legumes, grain, or mixtures thereof.

As used herein the term "emulsifier" refers to emulsifier that has been added to the dough ingredients. Emulsifiers that are inherently present in the dough ingredients, such as in the case of the potato flakes (where emulsifier is used as a processing aid during manufacturing), are not included in the term "emulsifiers."

The terms "fat" and "oil" are used interchangeably herein unless otherwise specified. The terms "fat" or "oil" refer to edible fatty substances in a general sense, including natural or synthetic fats and oils consisting essentially of triglycerides, such as, for example soybean oil, corn oil, cottonseed oil, sunflower oil, palm oil, coconut oil, canola oil, fish oil, lard and tallow, which may have been partially or completely hydrogenated or modified otherwise, as well as non-toxic fatty materials having properties similar to triglycerides, herein referred to as non-digestible fats, which materials may be partially or fully indigestible. Reduced calorie fats and edible non-digestible fats, oils or fat substitutes are also included in the term.

The term "non-digestible fat" refers to those edible fatty materials that are partially or totally indigestible, e.g., polyol fatty acid polyesters, such as OLEAN™. The preferred non-digestible fats are fatty materials having properties similar to triglycerides, such as sucrose polyesters. These preferred non-digestible fats are described in U.S. Patent No. 5,085,884, issued February 4, 1992 to Young et al. and U.S. Patent No. 5,422,131, issued June 6, 1995 to Elsen et al. An especially preferred brand of non-digestible fats is sold under the trade name OLEAN™.

By the term "dry blend" it is meant herein the dry raw material mixed together prior to processing of the materials so mixed.

All percentages are by weight unless otherwise specified.

All documents cited herein are, in relevant part, incorporated by reference; the citation of any document is not to be construed as an admission that it is prior art with respect to the present invention.

B. SNACK CHIPS

The present invention delivers a snack that has a high concentration of nutritional culinary nut ingredients. They are preferably formulated to also provide less fat than an equal serving of the same culinary nut. The present invention also delivers, for example, fruits, vegetables, meats, cheeses, nuts, fish, whole grains, eggs, and the like, in a snack that provides a natural flavor and a nutritional benefit from the ingredients. Moreover, the nutritional snacks of the present invention can be formulated without a need for added flavors to mimic the main natural ingredient. The snacks of this invention have a crispy and crunchy texture, and appealing appearance to consumers. Further, the dough and snacks made there from are low in off-flavors.

"Snack" and "Snack chip" and "snack crisp" are used interchangeably throughout and mean a product consumable by humans and other animals. Non-limiting examples of snacks and snack chips include products such as breads, crackers, fried snacks, fruit and vegetable snacks, baked or dried snacks, dog foods, dog biscuits and any other suitable food product.

The snacks can be made by combining the nut based material and dry ingredients with water to form a dough which is then sheeted. The sheeted dough is cut into desirable shapes and cooked. Alternatively, the cut shapes can be dried to form a fabricated snack "half product" which is a shelf stable intermediate. The mixing and drying can be done using low work input and drying temperatures below 121°C [250°F]. The fabricated snack product can be cooked by baking, frying in oil, vacuum baking or frying, microwaving, and mixtures of these to make the nutritional snack. The snack chip after the final cooking can have a crisp texture.

C. CULINARY NUT BASED MATERIAL

The nut based material can be derived from nuts selected from the group consisting of peanuts, hazelnuts, pistachios, hickory, cashews, chestnuts, pecans, walnuts, almonds, macadamia, brazil nuts, pine nuts, coconuts, and mixtures thereof. Preferably the culinary nut based material is made from nuts that have not been defatted. The nut based material can be in a form selected from the group consisting of fresh, raw, cooked, chopped, ground, paste, and mixtures thereof. The culinary nuts, whether raw or cooked, e.g., roasted, can be chopped or coarsely ground so as to better maintain the natural oil within the cells as opposed to producing a paste or butter where the oil is freed-up and more available. The culinary nuts can be chopped or ground up, so as to pass through a US #12 mesh screen. The culinary nuts can also be chopped or ground up, so as to pass through a US #12 mesh screen, but are retained on a US #40 mesh screen.

D. STARCH MATERIALS

As discussed above, to maximize the benefits of the nut based materials, the dough of the present invention should include from 40%, to 60%, preferably, from 45% to 55%, by weight of the snack chip of starch material made from materials selected from the group consisting of tapioca, rice and mixtures thereof. Preferably, the starch material is tapioca.

The starch material helps to display the authentic vegetable flavor of the vegetable snack of the present invention. Moreover, rice and tapioca based starch provide a neutral and clean flavor allowing the vegetable flavor to come through easier. Rice and tapioca have naturally bland flavors that do not mask the vegetable flavor like corn or potato flours will.

Further, at least 40% of the starch material used in the snack chips of this invention is pre-gelatinized. That is, at least a portion of the starch is cooked before adding the non-starch ingredients. Prior fabrications and formulae allowed for mixing the main ingredients and the starch and then cooking, that is, gelatinizing them both in-situ. In-situ gelatinization requires that the dough have very high moisture content or that moisture loss be controlled by pressure cooking or other methods know in the art. Regardless, the harsh conditions of in-situ gelatinization tend to destroy flavor and it is believed that the nutritional value of the nutritional ingredients is degraded as well.

While not wanting to be bound by any one theory, it is believed that in-situ gelatinization with, for example steam, brakes down the starch cells and frees up the amylose within the cells. The amylose may complex with flavor components resulting in a trapping of the flavor components. Moreover, in-situ gelatinization can cause the snack chip to be puffy and have an undesirable texture for a crisp chip. In pre-gelatinized starch, the cells are largely intact.

The starch materials serve also as processing and formulation additives that provide a better dough, resulting in a superior sheeted product from which the fabricated snack piece can be made.

Additional starch materials that can be used in the present invention include, but are not limited to, conventional rice flour, conventional tapioca flour, pre-gelatinized starches, low viscosity starches (e.g., dextrins, acid-modified starches, oxidized starches, enzyme modified starches), stabilized starches (e.g., starch esters, starch ethers), waxy rice starch or flour, crosslinked starches, acetylated starches, starch sugars (e.g. glucose syrup, dextrose, isoglucose) and starches that have received a combination of treatments (e.g., cross-linking and gelatinization) and mixtures thereof.

Those skilled in the art will appreciate that the starch materials described herein are commercially available, for example, from Remy Industries N.V., Remylaan 4, B-3018 Leuven-Wijgmaal, Belgium. The conventional rice flour includes long grain, medium grain, short grain and sweet or grain rice can all be made into rice flour. In addition, rice flour can be made from broken pieces or whole pieces of rice. Rice flours made from these different types of rice vary in water absorption index, peak viscosity, final viscosity, and total amylose content. Furthermore, if the rice is partially or fully pre-cooked, parboiled, or pre-gelatinized in any other way prior to, or after, processing into rice flour, the rice flour properties can be further modified.

Mixing together the desired quantities of various tapioca and rice flours can be used to make the desired starch materials. This can be accomplished by any suitable means such as, but not limited to, mixing the grains before milling, or mixing the flours together after milling.

In a preferred embodiment, gelatinized tapioca flour is used. In this embodiment, the composition can comprise a blend of one or more tapioca flours that have been gelatinized to varying degrees. For example, the gelatinized tapioca flour can comprise fully cooked tapioca, partially cooked tapioca, parboiled tapioca, extruded tapioca, or mixtures thereof. All of these methods are equally applicable to rice, and rice/tapioca blends. The fully cooked gelatinized rice or tapioca flour is from 75% to about 100% gelatinized, the partially cooked rice flour and the extruded rice flour is from 25% to 100% gelatinized, and the parboiled rice flour is from 75% to 100% gelatinized.

Extrusion is the preferred method of gelatinizing the tapioca or rice flour for this invention. Extrusion provides the cooking conditions required for the starch of the rice or tapioca flour to completely cook, resulting in complete gelatinization and high levels of dextrinization of the starch--i.e., starch degradation. The use of extrusion to prepare the rice flours for this invention guarantees the absence of a raw starch taste or the powdery starchy aftertaste and the uncontrolled and excessive expansion in the finished product. As is discussed below, extrusion is not desired for use in drying the dough or cooking the snack chip. Extrusion, while preferred for use on the starch alone, is believed to degrade both the flavor and the nutritional value of the nutritional ingredients, in this case the added vegetable ingredient.

Optionally, an emulsifier can be added to the starch material as a processing aide to complex the free amylose generated during cooking and/or milling. For example, monoglycerides can be added at a level ranging from 0.2 to 0.7%, and preferably from 0.3% to 0.5% (on a dry solids basis).

E. FABRICATED SNACK PRODUCT PREPARATION

The "fabricated snack product" or "snack chip" of some embodiments of the present invention can be directly cooked, for example by immediately baking, or dried as a "half-product". That means that it is dried, shelf stable and ready to cook. While the fabricated snack product can be consumed as a half-product, it generally is not considered to be in a consumer desirable form and will not have a crispy texture. More specifically, the taste and texture of a half-product is not so good.

The fabricated snack product of the present invention is made by combining the nut based material and dry ingredients with water to form a dough which is then sheeted and dried. Preferably, the mixing is done with low work input and drying temperatures are less than 121 °C [250 F]. To form the snack chip of the present invention, the half-product can be cooked by any of the methods discussed herein, although extrusion is not preferred for reasons discussed above. More preferably, the fabricated snack product of the present invention is made by combining the nut based material and dry ingredients with water to form a dough, which is then sheeted, pieces cut of a desirable shape, and cooked. To form the snack chip of the present invention, the cut pieces can be cooked by any of the methods discussed herein, preferably by baking. As discussed above, the present snacks provide substantial nutrition in a consumer acceptable format. That is, the present snacks are both tasty and nutritious. The present combination of composition and processing results in a snack that retains more nutritional elements, more flavor components, contains less fat than an equivalent serving of comparable culinary nuts or combination of nuts, and produces fewer off-flavors. By way of example, a snack chip made according to this invention with fresh raw almonds have a crispy and crunchy texture and have less fat than an equal serving of raw almonds and retain the almond flavor. Importantly desirable flavor notes of the almonds are retained in greater quantities by the compositions and processes of the present invention.

Although the use of the nut based materials in combination with the starch materials will be described primarily in terms of a preferred fabricated snack product, it should be readily apparent to one skilled in the art that the dough formed with these compositions can be used in the production of any suitable food products. For instance, the dough can be used to produce food products such as breads, sauces, crackers, fried snacks, fruit and vegetable snacks, baked or dried snacks, coatings for fried foods, dog foods, dog biscuits and any other suitable food product. The production of the preferred fabricated snack product is set forth in detail below.

1. DOUGH FORMULATION

The preferred doughs of the present invention comprise a dry blend and added water. Preferably, the doughs comprise from 40% to 70% dry blend which comprises the nut based material and from 30% to 60% water. Preferably the water is between 35% and 55%, and even more preferably between 40% and 50%, by weight of the dough. The water is a combination of the water added with the nut based material and added water. The culinary nut based materials of this invention typically contain very little water. Accordingly, essentially all of the water in the dough is added water. The dough can further comprise optional ingredients, including those that decrease the moisture content of the dough. For example, to lower the moisture content in the dough, the following ingredients can be added: 1) hydrolyzed starches into the dough, such as maltodextrins with low dextrose equivalent values; 2) polysaccharides such as Xanthans, hydroxypropyl cellulose, and combinations; and 3) emulsifiers.

a. DRY BLEND

Preferred doughs comprise from 40% to 70% dry blend, preferably from 45% to 65% dry blend.

The dry blend comprises the nut based materials, the starch materials, and optional dry ingredients discussed below. Preferred dry blends comprise from 30% to 60%, by weight of the dry ingredients, nut based materials; from 40% to 60%, by weight of the dry ingredients, starch material; and from 0% to 30%, by weight of the dry ingredients, optional ingredients. Furthermore, the balance of the dry blend can comprise one or more other components including but not limited to, protein sources, fiber, minerals, vitamins, colorants, flavors, fruits pieces, vegetables, seeds, herbs, spices, and mixtures thereof. It is sometimes beneficial to coat these other components before they are added to the dry blend.

b. ADDED WATER

Preferred dough compositions of the present invention comprise from 20% to 60% added water, preferably from 25% to 55%, and more preferably from 25% to 50% added water. If optional ingredients, such as maltodextrin or corn syrup solids, juices, concentrates, are added as a solution, the water in the solution is included as added water. The amount of added water also includes any water used to dissolve or disperse ingredients.

c. OPTIONAL INGREDIENTS

Any suitable optional ingredient may be added to the doughs of the present invention. Such optional ingredients can include, but are not limited to polysaccharides such as: gums and fibers, emulsifiers, and mixtures thereof. Optional ingredients are preferably included at a level ranging from 0% to 50%, preferably, 0% to 40%, by weight in the dough. Examples of suitable gums can be found in U.S. Patent No. 6,558,730, issued May 6, 2003, to Gizaw et al. Optional ingredients include, but are not limited to, natural or artificial flavors, oatmeal, fruits, nuts, flavor enhancers, fats and oils, natural sweeteners, artificial sweeteners, non-digestible fats or oils, vitamin or minerals and mixtures thereof, preferably, the optional ingredients are selected from the group consisting of salt, sugar, butter, artificial butter or spice flavors, artificial sweeteners, oil, and vegetable pieces, and mixtures thereof.

Additional starch materials may be added also, for example, oat, wheat, rye, barley, corn, masa, cassava, non-masa corn, peanut, dehydrated potato products (e.g., dehydrated potato flakes, potato granules, potato flanules, mashed potato materials, and dried potato products), as well as legumes, such as beans, chickpeas, and combinations of thereof. These other starch materials can be blended to make snacks of different compositions, textures, and flavors.

An ingredient that can optionally be added to the dough to aid in its processability is one or more emulsifiers. The addition of an emulsifier to the dough reduces the stickiness of the dough which minimizes sticking to the sheeting rolls, belts, and the like. Emulsifiers also have an effect on the texture of the final product, wherein higher levels of emulsifier result in denser finished products. An emulsifier is preferably added to the dough composition prior to sheeting the dough. The emulsifier can be dissolved in a fat or in a polyol fatty acid polyester such as Olean™. Suitable emulsifiers include lecithin, mono- and diglycerides, diacetyl tartaric acid esters and propylene glycol mono- and diesters and polyglcerol esters. Polyglycerol emulsifiers such as monoesters of hexaglycerols, can be used. Particularly preferred monoglycerides are sold under the trade names of Dimodan available form Danisco®, New Century, Kansas and DMG 70, available from Archer Daniels Midlands Company, Decatur, Illinois.

When calculating the level of optional ingredients according to the present invention, that level of optional ingredient which may be inherent in the nut based materials and starch material is not included.

2. DOUGH PREPARATION

The doughs of the present invention can be prepared by any suitable method for forming sheetable doughs. Typically, a loose, dry dough is prepared by thoroughly mixing together the ingredients using conventional mixers. Preferably, a pre-blend of the wet ingredients and a pre-blend of the dry ingredients are prepared; the wet pre-blend and the dry pre-blend are then mixed together to form the dough. Hobart® mixers are preferred for batch operations and Turbulizer® mixers are preferred for continuous mixing operations. Alternatively, non-heated extruders can be used to mix the dough and to form sheets or shaped pieces.

a. SHEETING

Once prepared, the dough is then formed into a relatively flat, thin sheet. Any method suitable for forming such sheets from starch-based doughs can be used. For example, the sheet can be rolled out between two counter rotating cylindrical rollers to obtain a uniform, relatively thin sheet of dough material. Any conventional sheeting, milling and gauging equipment can be used. The dough can also be formed into a sheet by a form extrusion device that does not cook the dough.

Doughs of the present invention are usually formed into a sheet having a thickness ranging from 0.020 to 0.10 inches (from 0.051 to 0.25 cm), and preferably to a thickness ranging from 0.025 to 0.06 inches (from 0.063 to 0.152 cm), and most preferably from 0.03 inches to 0.04 inches (0.076 to 0.101 cm).

The pieces may be formed by sheeting and cutting or it may be accomplished by extruding (i.e, a forming extruder) a cylinder of dough and cutting off thin layer, or by other suitable methods, including rotary molding.

The preferred half-product is sheeted and includes one or more sheets of a particular shape and in the size of the snacks known as hand-to-mouth (HTM), for example, Bugles™.

The dough sheet is then formed into snack pieces of a predetermined size and shape. The snack pieces can be formed using any suitable stamping or cutting equipment. The snack pieces can be formed into a variety of shapes. For example, the snack pieces can be in the shape of ovals, squares, circles, a bowtie, a star wheel, or a pin wheel. The pieces can be scored to make rippled chips as described by Dawes et al. in PCT Application No. PCT/US95/07610, published January 25, 1996 as WO 96/01572.

b. DRYING

The snack pieces cut from the sheeted dough described above can be dried to make the half-product described above. The drying process is preferably a slow and gentle process that does not degrade the authentic flavor and nutritional value of the nutritional ingredients. Any of a number of methods of drying can be used, for example, baking, vacuum drying, microwave heating, and mixtures of these is also acceptable. Little or no gelatinization of the starch occurs at this step.

c. COOKING

The snack pieces cut from the sheeted dough described above, or alternatively the dried half product described above, are cooked to form a crisp nutritious snack. The cooking step removes the remaining moisture in the half product to provide a snack having a final moisture content of from 0,1% to 1%. It is the cooking step that provides the crisp texture. The final apparent densities range from 0.3 to 1.1 g/cc, preferably from 0.04 to 1.0 g/ml, more preferably, from 0.6 to 0.9.

The cooking can be by baking, microwaving, frying, vacuum frying, or vacuum baking in an oven to make the nutritious snack. Combinations of these are also acceptable. Preferably the cooking choice is by baking.

Baking can be done in a radiant heat oven, impingement oven, forced air convection oven, or a convection oven, alone or in combination. The baking can be done at a single selected condition, for example a single temperature, or preferably baked in multiple zones where different temperatures, bake times, air velocities, can be used. More preferably, the snack crisps are baked at 177 °C to 204 °C [350 to 400 F] for about 1 to 2.5 minutes, and then allowed to continue baking at 107 to 149 °C [225 to 300F] for about 5 to 30 minutes. The temperature and length of time at the lower baking temperature is variable and is determined by the oven style used and how long it takes the product moisture to be less than 5%. The temperature and length of time at the initial high temperature is variable as well and is determined by the texture development desired. Conventional home or restaurant ovens may be used as well as commercial units which move the product on a belt through various heating zones.

A combination of vacuum baking and conventional baking can also be used.

Microwave cooking can also be used to make the nutritional snack. For example, microwaves that may be used include conventional microwaves, microwaves equipped with halogen lights and combination microwave-convection ovens.

Although not the preferred method, cooking by frying, for example, in a fat composition comprising digestible fat, non-digestible fat, or mixtures thereof can be done. For best results, clean frying oil should be used. The free fatty acid content of the oil should preferably be maintained at less than 1%, more preferably less than 0.3%, in order to reduce the oil oxidation rate. Any other method of cooking, such as baking, vacuum drying, microwave heating, and mixtures of these is also acceptable. When the snack chips are cooked by a method other than frying in oil, it is often desirable to add some oil to the dough as an optional ingredient as described above. Oil can be added to snack chips that are fried as well.

In one embodiment of this invention the dough is made into a fabricated snack product that is dried using microwave heating and then fried to a density from 0.4 to 1.0 g/ml.

In a preferred embodiment of the present invention, the frying oil has less than 30% saturated fat, preferably less than 25%, and most preferably, less than 20%. This type of oil improves the lubricity of the finished snack chips such that the finished snack chips have an enhanced flavor display. The flavor profile of these oils also enhances the flavor profile of topically seasoned products because of the oils' lower melting point. Examples of such oils include sunflower oil containing medium to high levels of oleic acid.

In another embodiment of the present invention, the fabricated snack products are fried in a blend of non-digestible fat and digestible fat. Preferably, the blend comprises from 20% to 90% non-digestible fat and from 10% to 80% digestible fat, more preferably from 50% to 90% non-digestible fat and from 10% to 50% digestible fat, and still more preferably from 70% to 85% non-digestible fat and from 15% to 30% digestible fat. Other ingredients known in the art can also be added to the edible fats and oils, including antioxidants such as TBHQ, tocopherols, ascorbic acid, chelating agents such as citric acid, and anti-foaming agents such as dimethylpolysiloxane.

In another embodiment of the present invention, the fabricated snack products are fried in oils with low levels of saturated fat, such as high oleic sunflower oil, corn oil, rice oil, mid oleic sunflower oil, palm oil and mixtures thereof.

It is preferred to fry the fabricated snack products at temperatures of from 275°F (135°C) to 420°F (215°C), preferably from 300°F (149°C) to 410°F (210°C), and more preferably from 350°F (177°C) to 400°F (204°C) for a time sufficient to form a product having 1% or less moisture, preferably from 0.1% to 1% moisture.

Preferably, the fabricated snack products are fried in oil using a continuous frying method and are constrained during frying. This constrained frying method and apparatus is described in U.S. Patent No. 3,626,466 issued December 7, 1971 to Liepa. The shaped, constrained snack pieces are passed through the frying medium until they are fried to a crisp state with final moisture content of from 0.1% to 1%.

Any other method of frying, such as continuous frying or batch frying of the fabricated snack products in a non-constrained mode, is also acceptable. For example, the snack pieces can be immersed in the frying fat on a moving belt or basket. Likewise, frying can occur in a semi-constrained process. For example, the fabricated snack products can be held between two belts while being fried in oil.

Oils with characteristic flavor or highly unsaturated oils can be sprayed, tumbled, or otherwise applied onto the fabricated snack products after frying. Preferably triglyceride oils and non-digestible fats are used as a carrier to flavors and are added topically to the fabricated snack products. These include, but are not limited to, butter flavored oils, natural or artificial flavored oils, herb oils, and oils with potato, garlic, or onion flavors added. This method can be used to introduce oils which would ordinarily undergo polymerization or oxidation during the heating necessary to cook the snacks.

The fat content of the finished snack chips of this invention ranges from 5 grams to 15 grams per a 28 gram serving of chips. Preferably the fat content of the snack chip is less than 12g of fat per a 28 gram serving of chips, and even more preferably, less than 8 grams of fat for a 28 gram serving. This represents approximately 11 to 60% reduction in the fat content depending on the nut or nuts chosen when compared to an equivalent weight serving of the culinary nut(s). More preferably, a 40 to 60% reduction in the fact content occurs when compared to an equivalent weight serving of the culinary nut(s).

F. PRODUCT CHARACTERISTICS AND ANALYTICAL METHODS

1. CHIP DENSITY TEST PROCEDURE

The density of the snack product is performed by means of Archimedes' principle (buoyancy method). Density is used in many areas to characterize certain properties of a product or material. The buoyancy method is a technique for measuring the bulk volume of a sample by submerging it in a bath of glycerin and observing the increase in weight of the bath, following Archimedes principle.

Fill a container with enough glycerine to submerge the sample. Submerge a clip in glycerine so that the fine wire is at the interface, and tare the scale.

Carefully determine the weight of each sample with a balance. This weight determination should be made prior to the samples picking up a significant weight of water when exposed to the environment.

Attach the sample to clip and fully submerge in the glycerine, including clip. Make sure the sample does not touch the walls of the vessel. Record the weight. Repeat using 5 different samples times. Calculate density from the following equation:

$$D s = \frac{Df \ X \ Ws}{(Ws-F)}$$

Where:

- Ds = Density of Specimen
- Df = Density of Fluid (Glycerine = 1.262)
- Ws = Weight of Specimen Before Submerging
- F = Reading on Scale with Specimen Submerged

An average of the five densities readings is used.

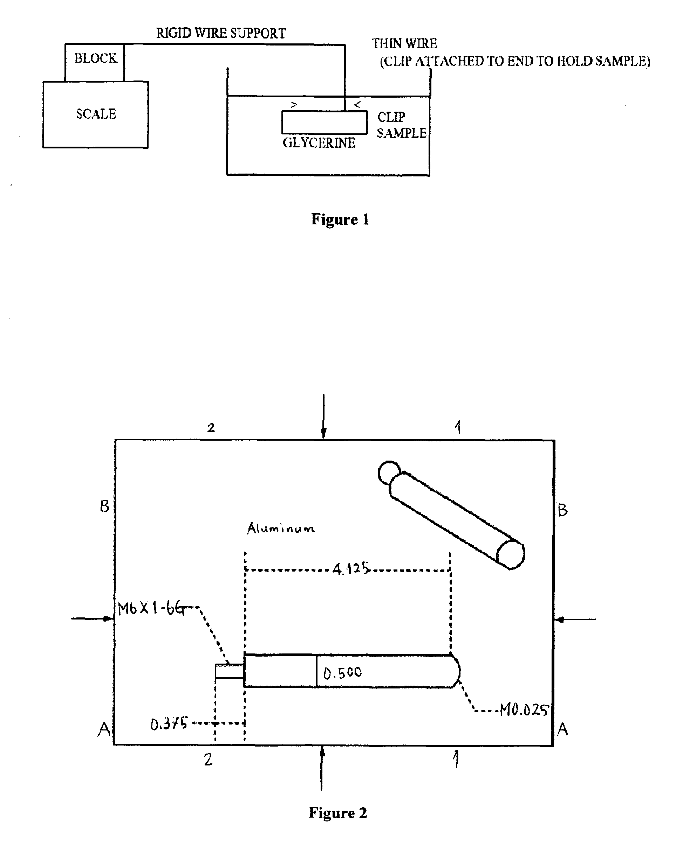

## DIAGRAM OF DENSITY EQUIPMENT SETUP (See Figure 1)

### 2. PERCENT FAT ANALYSIS

The percent of total fat in a chip can be measured by standard procedures known to those in the food arts, preferably, the total fat is measured by acid hydrolysis. Specifically, the method for measuring total fat by acid hydrolysis can be found in AOAC International (2000) 17th edition AOAC International, Gaithersburg, MD, USA, Official Methods 922.06, 954.02.

### 3. WATER ACTIVITY

This method is based on the Rotronic Hygroskop DT (Rotronic Instrument Corp. 160 East Main Street, Huntington, NY 11743) water activity meter, using their sample cell: Model WA-40TH.

Method:

1) Ensure that the temperature gauge on the DT unit displays 25±0.1°C. If not adjust water bath thermometer until the display shows 25±0.1°C.
2) Put sample in sample cup to cover base up to about 2-3 mm.
3) Put sample cup containing sample in the measuring cell and turn lever all the way to the right to isolate the measuring chamber.
4) Wait requisite amount of time until readings stabilize (Only the displays are lit up)-typically 45 min. to a few hours.
5) Record measurement and remove sample cup from measuring chamber.
6) In case of spillage, clean chamber with distilled water and air dry.

### 4. CHIP FRACTURE FORCE

This method is based on Stable Micro Systems Texture Analyzer Model: Upgrade Plus Texture Technologies Corp., 18 Fairview Road, Scarsdale, NY 10583-2136.

Method Description:

The instrument is setup with a 5kg load cell. A three-pin tripod base (specifications given below) is attached to the base of the Texture Analyzer (TA). The cylindrical probe (specifications given below) is attached to the force arm of the TA, and the instrument is calibrated for force, following the instruments instructions. A test chip is positioned equidistantly on the tripod base. The instrument is run based on the T.A.Settings conditions described below. The force arm descends bringing the cylindrical probe and chip into contact; force is applied to the chip until a break is registered. The force arm then returns to its original position. A total of 20 chips are analyzed and the maximum peak force of each is determined. A Q-test analysis is applied to the dataset, to determine whether any data outliers exist at a 90% confidence level, and if so, one observation can be removed from the analysis. Remaining observations are averaged and recorded as the samples chip fracture force in gf (gram force).

| T.A. Settings: | | |
|---|---|---|
| Sequence Title | Return to Start | |
| Test Mode | 1 = Compression | Defines the initial probe direction and force polarity |
| Pre Test Speed | 0.33333mm/sec (20.0mm/min) | Speed while searching for the trigger point |
| Test Speed | 0.08333mm/sec (5.0mm/min) | Speed of approach to target (after triggering) |
| Post Test Speed | 0.83333mm/sec (50.0mm/min) | Speed at which the probe returns to the start point |
| Target Mode | 0 = Distance | Select Distance, Strain or Force as the target parameter |
| Distance | 3.000mm | Target distance/deformation |
| Trigger Type | Auto (Force) | How the initiation of data capture is defined |
| Trigger Force | 5.0 g | Amount of force for the TA to initiate data capture (normally when product is detected) |
| Break Mode | Level | If and how the TA detects when the product has broken |
| Break Sensitivity | 5.0 g | Sensitivity of the break detect mechanism |
| Break Detect | Return | Action taken when a product break is detected |
| Stop Plot At | Start Position | Determines at which point data capture is switched off |
| Tare Mode | Auto | Determines when the force is zeroed |
| Advanced Options | On | Determines if advanced options are displayed |
| Control Oven | Disabled | |
| Frame Deflection Correction | Off | |

Tripod Base and Cylindrical Probe Specifications:

Q-test Analysis:

In a set of replicate measurements of a physical or chemical quantity, one or more of the obtained values may differ considerably from the majority of the rest. In this case there is always a strong motivation to eliminate those deviant values and not to include them in any subsequent calculation (e.g. of the mean value and/or of the standard deviation). This motivation is permitted only if the suspect values can be "legitimately" characterized as outliers.

Usually, an outlier is defined as an observation that is generated from a different model or a different distribution than was the main "body" of data. Although this definition implies that an outlier may be found anywhere within the range of observations, it is natural to suspect and examine as possible outliers only the extreme values.

The rejection of suspect observations must be based exclusively on an objective criterion and not on subjective or intuitive grounds. This can be achieved by using statistically sound tests for "the detection of outliers".

The Dixon's Q-test is the simpler test of this type and it is usually the only one described in textbooks of Analytical Chemistry in the chapters of data treatment. This test allows us to examine if one (and only one) observation from a small set of replicate observations (typically 3 to 10) can be "legitimately" rejected or not.

Q-test is based on the statistical distribution of "sub range ratios" of ordered data samples, drawn from the same normal population. Hence, a normal (Gaussian) distribution of data is assumed whenever this test is applied. In case of the detection and rejection of an outlier, Q-test cannot be reapplied on the set of the remaining observations.

How the Q-test is applied

The test is applied as follows:

(1) The N values comprising the set of observations under examination are arranged in ascending order:

$$x_1 < x_2 < \ldots < x_N$$

(2) The statistic experimental Q-value ($Q_{exp}$) is calculated. This is a ratio defined as the difference of the suspect value from its nearest one divided by the range of the values (Q: rejection quotient). Thus, for testing $x_1$ or $x_N$ (as possible outliers) we use the following $Q_{exp}$ values:

$$Q_{exp} = \frac{X_2 - X_1}{X_N - X_1} \qquad Q_{exp} = \frac{X_N - X_{N-1}}{X_N - X_1}$$

(3) The obtained $Q_{exp}$ value is compared to a critical Q-value ($Q_{crit}$) found in tables. This critical value should correspond to the confidence level (CL) we have decided to run the test (usually: CL=95%).
(4) If $Q_{exp} > Q_{crit}$, then the suspect value can be characterized as an outlier and it can be rejected, if not, the suspect value must be retained and used in all subsequent calculations.

The null hypothesis associated to Q-test is as follows: "There is no a significant difference between the suspect value and the rest of them, any differences must be exclusively attributed to random errors".

A table containing the critical Q values for CL 90%, 95% and 99% and N=3-10 is given below [from: D.B. Rorabacher, Anal. Chem. 63 (1991) 139].

Table of critical values of Q

| N | $Q_{crit}$ (CL:90%) | $Q_{crit}$ (CL:95%) | $Q_{crit}$ CL:99% |
|---|---|---|---|
| 3 | 0.941 | 0970 | 0994 |
| 4 | 0.765 | 0829 | 0.926 |
| 5 | 0.642 | 0.710 | 0.821 |
| 6 | 0560 | 0.625 | 0.740 |
| 7 | 0507 | 0.568 | 0.680 |
| 8 | 0.468 | 0.526 | 0634 |
| 9 | 0.437 | 0493 | 0.598 |
| 10 | 0412 | 0466 | 0.568 |

G. EXAMPLES 1, 2, 3, and 4

Particular embodiments of the present invention are illustrated by the following non-limiting examples. The following examples were made by a lab bench process.

Table 1 lists the composition and their amounts for three nut based snacks according to the present invention. Example 1 is a hazelnut based snack chip.

A hazelnut chip is made by first grinding pregelled tapioca granules such that it passes through a US #30 mesh sieve. The hazelnuts are ground into a dry powder in a Power Chopper. The hazelnuts and tapioca are then mixed in by hand and the water is added. The total mixture is placed into a Cuisinart© mixer and mixed for approximately 30 seconds until the starch is completely blended and a dough is formed.

The dough is then rolled, using a rolling pin, between wax paper to a thickness of from about .035 to about 0.40 inches. Circles approximately 2 inches in diameter are cut from the sheeted dough. The circles are placed on stainless steel trays, placed in a Lang forced air oven at about 200 F to a moisture of 10% and the water activity is less than about 0.85 to produce a half-product. The oven is from Lang Manufacturing Co. of Everett, WA.

The half-product is finished by baking in a Holman Minivevor conveyor oven from Star Manufacturing International, Inc. of St. Louis, MO, and is a Model 210HX. The oven conditions used were a 7.0 setting for the bottom heat, a 7.5 setting for the top heat, and a conveyor speed of 1.0 minute. An ancillary temperature probe placed approximately one third of the way centered into the oven and approximately one inch and a half above the conveyor belt showed an oven temperature of approximately 300°F (148.9°C) at these conditions. The final product had a crispy texture, with a strong hazelnut taste, and had a water activity of about 0.64.

Example 2 is a hazelnut based snack chip that is direct baked. All of the dry ingredients are placed in a kitchen aid mixing bowl to form a dry mix and blended using a mixing paddle for approximately one minute. Water is slowly added to the dry mix while mixing on speed 2 to form a dough. After all of the water was added, the dough was allowed to continue mixing for an additional five minutes. The dough was sheeted to a gauge of approximately 0.035 to 0.040 inch thickness using a Doyon Pasta Sheeter (Doyon, Inc. of Quebec, Canada.) Circle shapes, having an approximate two inch diameter, were cut from the sheet and placed onto stainless steel wire mesh trays. The trays were placed onto the conveyor belt of a Middleby Marshall model PS670 (The Middleby Corporation of Elgin, IL) two zone impingement oven. Oven conditions for each zone were 365°F (185°C), and the chips were baked for one minute and 56 seconds. Chop moisture upon exiting the oven was approximately 9.5%. The trays were transferred to our Lang forced air oven at 225°F (107.2°C) for 12 minutes. The finished baked chips had 1.77% moisture and were approximately 0.075 inches thick. The final product had a crispy texture with a strong hazelnut taste and had a water activity of about 0.70. The product's physical properties realized a chip fracture force of 197gf and a density of 0.675.

Table 1
Example Nos. 1-4

| Dry Mix | Mfg. and Ref# | 1 Dry Wt. % | 2 Dry Wt. % | 3 Dry Wt. % | 4 Dry Wt. % |
|---|---|---|---|---|---|
| Hazelnut, ground | Blue Diamond, 179057601 | 60 | 40 | 0 | 0 |
| Dry Roasted Peanut | Planters, 1-17-08G1 | 0 | | 42 | 0 |
| Almond Paste | Blue Diamond, Pack 95 89, Lot 01805 | 0 | | 0 | 60 |
| Tapioca Starch <30 mesh | Kraft KFI 11800 80000 | 40 | | 58 | 40 |
| Pregel Tapioca Starch | TI Star | | 22 | | |
| Ground Oats | Grain Miller #50 | | 7.5 | | |
| Pregelled Wheat Starch | Mainuldra Milling | | 15.25 | | |
| Rice Flour | Sage V Foods GL1080 | | 15.25 | | |
| Dough Mix | | % | % | % | % |
| Dry ingredient mix described above | | 50 | 60 | 45 | 58 |
| Water | | 50 | 40 | 55 | 42 |

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

**Claims**

1. A dough composition for making a fabricated snack chip, comprising:

   (a) from 40% to 70% by weight of a dry blend comprising

      (i) from 30% to 60% by weight of a culinary nut based material made from nuts that have not been defatted;
      (ii) from 40% to 60% by weight of a starch material made from materials selected from the group consisting of tapioca, rice, and mixtures thereof;
      (iii) from 0% to 30% optional dry ingredients;

   (b) from 20% to 60% by weight of added water;
   (c) from 0% to 50% by weight of optional ingredients;

   wherein at least 40% of the starch material is pre-gelatinized.

2. The dough composition of claim 1 **characterized in that** the culinary nut based material is derived from nuts selected from the group consisting of peanuts, hazelnuts, pecans, walnuts, almonds, macadamia, Brazil nuts, hickory nuts, cashews, pine nuts, pistachios, and mixtures thereof.

3. The dough composition of any of the preceding claims **characterized in that** the optional ingredients are selected from the group consisting of natural or artificial flavors, oatmeal, fruits, vegetables, flavor enhancers, fats and oils, natural sweeteners, artificial sweeteners, non-digestible fats or oils, vitamins, minerals and mixtures thereof, preferably, the optional ingredients are selected from the group consisting of salt, sugar, butter, artificial butter or spice flavors, artificial sweeteners, oil, and vegetable pieces, and mixtures thereof.

4. The dough composition of any of preceding claims **characterized in that** the nut based material is at a moisture content of less than 15%, by weight.

5. A process for preparing the dough composition of any of preceding claims, comprising the steps of:

   a) preparing a pre-blend of the wet ingredients and a pre-blend of the dry ingredients; and
   b) mixing together the wet pre-blend and dry pre-blend to form the dough composition.

6. A process for making fabricated snack chips, comprising:

   (a) preparing a dough composition as defined in any of claims 1-4;
   (b) sheeting the dough composition;
   (c) cutting the sheeted dough composition into pieces;
   (d) drying the pieces at a temperature of less than 121°C (250°F) to a moisture content of less than 15% by weight to form dried pieces; and
   (e) cooking the dried pieces to form fabricated snack chips.

7. The process for making fabricated snack chips of claim 6 wherein the cooking step is selected from the group consisting of baking, frying in oil, vacuum baking, vacuum frying, microwaving, and combinations and mixtures thereof.

8. The process for making fabricated snack chips of claim 7 wherein the cooking step is baking.

9. A fabricated snack chip obtainable by the process of any of claims 6-8 comprising from 0.1% to 1.0% water.

10. The fabricated snack chip of claim 9 **characterized in that** the snack chip has from 5 grams to 15 grams of fat, more preferably less than 8 grams of fat, per 28 grams of chips.

11. The fabricated snack chip of any of claims 9 and 10 **characterized in that** the snack chip has a density of from 0.3 to 1.0 g/ml, more preferably 0.4 to 0.9 g/ml, most preferably 0.4 to 0.8 g/ml.


**Patentansprüche**

1. Teigzusammensetzung zur Herstellung eines Knabberchip-Fertigprodukts, umfassend:

   (a) zu 40 Gew.-% bis 70 Gew.-% eine trockene Mischung, die umfasst:

   (I) zu 30 Gew.-% bis 60 Gew.-% ein auf einer Nusszubereitung basierendes Material, das aus Nüssen besteht, die nicht entfettet wurden,
   (II) zu 40 Gew.-% bis 60 Gew.-% ein Stärkematerial, das aus Materialien besteht, die ausgewählt sind aus der Gruppe bestehend aus Tapioka, Reis und Mischungen davon,
   (III) zu 0 Gew.-% bis 30 Gew.-% optionale trockene Inhaltsstoffe,

   (b) zu 20 Gew.-% bis 60 Gew.-% hinzugefügtes Wasser,
   (c) zu 0 Gew.-% bis 50 Gew.-% optionale Inhaltsstoffe,

   wobei mindestens 40 % des Stärkematerials vorverkleistert sind.

2. Teigzusammensetzung nach Anspruch 1, **dadurch gekennzeichnet, dass** das auf einer Nusszubereitung basierende Material von Nüssen stammt, die ausgewählt sind aus der Gruppe bestehend aus Erdnüssen, Haselnüssen, Pekannüssen, Walnüssen, Mandeln, Makadamianüssen, Paranüssen, Hickory-Nüssen, Cashew-Nüssen, Pinienkernen, Pistazien und deren Mischungen.

3. Teigzusammensetzung nach einem der vorstehenden Ansprüche, **dadurch gekennzeichnet, dass** die optionalen Inhaltsstoffe ausgewählt sind aus der Gruppe bestehend aus natürlichen oder künstlichen Aromen, zerkleinertem Hafer, Früchten, Gemüse, Geschmacksverstärkern, Fetten und Ölen, natürlichen Süßungsmitteln, künstlichen Süßungsmitteln, nicht-verdaulichen Fetten oder Ölen, Vitaminen, Mineralien und Mischungen davon, wobei die optionalen Inhaltsstoffe vorzugsweise ausgewählt sind aus der Gruppe bestehend aus Salz, Zucker, Butter, künstlicher Butter oder Gewürzaromen, künstlichen Süßungsmitteln, Öl und Gemüsestückchen und Mischungen davon.

4. Teigzusammensetzung nach einem der vorstehenden Ansprüche, **dadurch gekennzeichnet, dass** das auf Nüssen basierende Material einen Feuchtigkeitsgehalt von weniger als 15 Gew.-% aufweist.

5. Verfahren zum Herstellen der Teigzusammensetzung nach einem der vorstehenden Ansprüche, die folgenden Schritte umfassend:

   a) Herstellen einer Vormischung aus den feuchten Inhaltsstoffen und einer Vormischung aus den trockenen Inhaltsstoffen und
   b) Vermischen der feuchten Vormischung und der trockenen Vormischung, um die Teigzusammensetzung zu bilden.

6. Verfahren zum Herstellen von Knabberchip-Fertigprodukten, umfassend:

   (a) Herstellen einer Teigzusammensetzung nach einem der Ansprüche 1 - 4,
   (b) Auswalzen der Teigzusammensetzung,
   (c) Schneiden der ausgewalzten Teigzusammensetzung in Stücke,
   (d) Trocken der Stücke bei einer Temperatur von unter 121 °C (250 °F) auf einen Feuchtigkeitsgehalt von weniger als 15 Gew.-%, um trockene Stücke zu bilden, und
   (e) Garen der getrockneten Stücke, um Knabberchips-Fertigprodukte zu bilden.

7. Verfahren zum Herstellen von Knabberchip-Fertigprodukten nach Anspruch 6, wobei der Garschritt ausgewählt ist aus der Gruppe bestehend aus Backen, Frittieren in Öl, Vakuum-Backen, Vakuum-Frittieren, Garen in der Mikrowelle und Kombinationen und Mischungen davon.

8. Verfahren zum Herstellen von Knabberchip-Fertigprodukten nach Anspruch 7, wobei der Garschritt Backen ist.

9. Knabberchip-Fertigprodukt, das anhand des Verfahrens nach einem der Ansprüche 6 - 8 erhalten werden kann und das 0,1 % bis 1,0 % Wasser enthält.

10. Knabberchip-Fertigprodukt nach Anspruch 9, **dadurch gekennzeichnet, dass** der Knabberchip 5 Gramm bis 15 Gramm Fett, stärker bevorzugt weniger als 8 Gramm Fett pro 28 Gramm Chips enthält.

11. Knabberchip-Fertigprodukt nach einem der Ansprüche 9 und 10, **dadurch gekennzeichnet, dass** der Knabberchip eine Dichte von 0,3 bis 1,0 g/ml, stärker bevorzugt von 0,4 bis 0,9 g/ml, am stärksten bevorzugt von 0,4 bis 0,8 g/ml aufweist.

## Revendications

1. Composition de pâte pour fabriquer un amuse-gueule de transformation, comprenant :

   (a) de 40 % à 70 % en poids d'un mélange sec comprenant

   (i) de 30 % à 60 % en poids d'un matériau culinaire à base de fruit à coque fabriqué à partir de fruits à coques qui n'ont pas été dégraissés ;
   (ii) de 40 % à 60 % en poids d'un matériau d'amidon fabriqué à partir de matériaux choisis dans le groupe constitué de tapioca, riz, et leurs mélanges ;
   (iii) de 0 % à 30 % d'ingrédients secs facultatifs ;

   (b) de 20 % à 60 % en poids d'eau ajoutée ;
   (c) de 0 % à 50 % en poids d'ingrédients facultatifs ;

   dans lequel au moins 40 % du matériau d'amidon est pré-gélatiné.

2. Composition de pâte selon la revendication 1, **caractérisée en ce que** le matériau culinaire à base de fruit à coque est dérivé de fruits à coques choisis dans le groupe constitué de cacahouètes, noisettes, noix de pécan, noix, amandes, macadamia, noix du Brésil, noix d'Amérique , noix de cajou, pignons de pin, pistaches, et leurs mélanges.

3. Composition de pâte selon l'une quelconque des revendications précédentes, **caractérisée en ce que** les ingrédients facultatifs sont choisis dans le groupe constitué d'arômes naturels ou artificiels, farine d'avoine, fruits, légumes, rehausseurs d'arôme, graisses et huiles, édulcorants naturels, édulcorants artificiels, graisses ou huiles non digestibles, vitamines, minéraux et leurs mélanges, de préférence, les ingrédients facultatifs sont choisis dans le groupe constitué de sel, sucre, beurre, beurre artificiel ou saveurs d'épices, édulcorants artificiels, huile, et pièces de légume, et leurs mélanges.

4. Composition de pâte selon l'une quelconque des revendications précédentes, **caractérisée en ce que** le matériau à base de fruit à coque est à une teneur en humidité inférieure à 15 % en poids.

5. Procédé pour préparer la composition de pâte selon l'une quelconque des revendications précédentes, comprenant les étapes consistant à :

   a) préparer un pré-mélange des ingrédients humides et un pré-mélange des ingrédients secs ; et
   b) mélanger conjointement le pré-mélange humide et le pré-mélange sec de façon à former la composition de pâte.

6. Procédé de fabrication d'amuse-gueule de transformation, comprenant :

   (a) la préparation d'une composition de pâte selon l'une quelconque des revendications 1 à 4 ;
   (b) la mise en feuille de la composition de pâte ;
   (c) la découpe de la composition de pâte abaissée en feuille en pièces ;
   (d) le séchage des pièces à une température inférieure à 121°C (250 °F) jusqu'à une teneur en humidité inférieure à 15 % en poids de façon à former des pièces séchées ; et
   (e) la cuisson des pièces séchées de façon à former des amuse-gueule de transformation.

7. Procédé de fabrication d'amuse-gueule de transformation selon la revendication 6, dans lequel l'étape de cuisson est choisie dans le groupe constitué de cuisson au four, friture dans l'huile, cuisson sous vide, friture sous vide, passage aux micro-ondes, et leurs combinaisons et mélanges.

8. Procédé de fabrication d'amuse-gueule de transformation selon la revendication 7, dans lequel l'étape de cuisson est une cuisson au four.

9. Amuse-gueule de transformation pouvant être obtenu par le procédé selon l'une quelconque des revendications 6 à 8, comprenant de 0,1 % à 1,0 % d'eau.

10. Amuse-gueule de transformation selon la revendication 9, **caractérisé en ce que** l'amuse-gueule possède de 5 grammes à 15 grammes de graisse, plus préférablement moins de 8 grammes de graisse, pour 28 grammes d'amuse-gueule.

11. Amuse-gueule de transformation selon l'une quelconque des revendications 9 et 10, **caractérisé en ce que** l'amuse-gueule a une masse volumique allant de 0,3 à 1,0 g/mL, plus préférablement 0,4 à 0,9 g/mL, le plus préférablement 0,4 à 0,8 g/mL.

RIGID WIRE SUPPORT

THIN WIRE
(CLIP ATTACHED TO END TO HOLD SAMPLE)

BLOCK

SCALE

GLYCERINE

CLIP
SAMPLE

> <

**Figure 1**

2

1

B

B

Aluminum

4.125

M6 X 1-6G

0.500

M0.025

0.375

A

A

2

1

**Figure 2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5498438 A, Strong
- WO 0221937 A
- US 5085884 A, Young
- US 5422131 A, Elsen
- US 6558730 B, Gizaw
- US 9507610 W
- WO 9601572 A
- US 3626466 A, Liepa

**Non-patent literature cited in the description**

- **D.B. RORABACHER.** *Anal. Chem.,* 1991, vol. 63, 139